# EUROPÄISCHE PATENTSCHRIFT

(11) **EP 3 278 396 B1**
(45) Veröffentlichungstag und Bekanntmachung des Hinweises auf die Patenterteilung: **11.12.2019**
(21) Anmeldenummer: 16711870.2
(22) Anmeldetag: 29.03.2016
(51) Int. Cl.: H01Q 1/32, H01Q 7/06, H01Q 21/24, H01Q 1/22

(54) **ANTENNENBAUELEMENT**
ANTENNA COMPONENT
COMPOSANT D'ANTENNE

(30) Priorität: 31.03.2015 DE 102015104993
(43) Veröffentlichungstag der Anmeldung: 07.02.2018
(73) Patentinhaber: TDK Electronics AG, 81671 München (DE)
(72) Erfinder: JEREZ, Felipe, 89275 Elchingen (DE); DRESPLING, Anneliese, 89522 Heidenheim (DE); WALTER, Elmar, 89542 Herbrechtingen (DE); BÜHLMAIER, Stephan, 89129 Langenau (DE); SCHLIEWE, Jörn, 89555 Steinheim (DE)
(74) Vertreter: Epping - Hermann - Fischer
(86) Internationale Anmeldenummer: PCT/EP2016/056815
(87) Internationale Veröffentlichungsnummer: WO 2016/156326

(56) Entgegenhaltungen:
- CN-U- 202 977 699
- JP-A- 2006 080 107
- JP-A- 2006 245 044
- JP-A- 2013 165 368
- US-A1- 2005 083 242
- US-A1- 2007 091 009
- US-A1- 2008 036 672
- Elektrisola: "Médéné lakované dráty", , 1. Dezember 2011 (2011-12-01), Seiten 1-6, XP055277834, Gefunden im Internet: URL:http://www.ermeg.cz/download/brands-do cuments/elektrisola/elektrisola-katalog_CZ .pdf [gefunden am 2016-06-03]
- Tsc International: "TSC International - Catalog (Soft Ferrite Cores, Iron Powder Cores, Magnetic Laminations)", , 1. Januar 2007 (2007-01-01), Seiten 1-88, XP055278085, Gefunden im Internet: URL:http://www.tscinternational.com/tsc-ca talog.pdf [gefunden am 2016-06-06]
- Ferroxcube: "4B2 Material specification", , 1. September 2008 (2008-09-01), Seiten 1-3, XP055277839, Gefunden im Internet: URL:http://www.ferroxcube.com/FerroxcubeCo rporateReception/datasheet/4b2.pdf [gefunden am 2016-06-03]

## Beschreibung

Die Erfindung betrifft ein Antennenbauelement, das insbesondere in einem Empfänger eines passiven Zutritts-Berechtigungssystems und/oder einem passiven Berechtigungssystem zum Starten eines Motors, beispielsweise eines Fahrzeugs, verwendbar ist.

In den letzten Jahren wurden verschiedene Technologien für drahtlose Zugangssysteme in Automotive-Anwendungen, die einen passiven Zugang zum Fahrzeug und das passive Starten des Fahrzeugs ermöglichen, entwickelt. Solche Systeme nutzen niederfrequente Antennensysteme, die in einer Sendeeinheit im Fahrzeug und in einer Empfängereinheit eines Funkschlüssels vorgesehen sind. Eine in der Empfängereinheit integrierte Antenne muss den Empfang von Signalen in sämtlichen drei Raumrichtungen gewährleisten.

Eine Möglichkeit besteht darin, für jede Raumrichtung eine gesonderte Antenne in der Empfängereinheit vorzusehen. Diese Lösung ist jedoch kostspielig und mit einem hohen Platzaufwand verbunden. Neben der Forderung nach Antennen mit kleiner Bauart und niedrigen Kosten sind in den letzten Jahren auch die Anforderungen an die physikalischen Eigenschaften von Antennen für Automotive-Anwendungen ständig gestiegen. Die Antennen sollen sich durch eine hohe Empfindlichkeit, das heißt durch hohe induzierte Spannungen bei gegebenem Feld, und einen großen Q-Faktor auszeichnen. Des Weiteren sollen sie mechanisch robust sein und bei gleichzeitig niedrigen Kosten eine hohe Zuverlässigkeit garantieren. Dazu muss insbesondere gewährleistet sein, dass die elektrische Kontaktierung innerhalb der Antennenstruktur auch unter mechanischem Stress unversehrt bleibt beziehungsweise Kurzschlüsse zwischen elektrischen Leitern der Antenne vermieden werden.

In den Druckschriften US 2005/083242 A1, US 2008/036672 A1, JP 2013 165368 A, US 2007/091009 A1 und CN 202977699 sind Ausführungsformen von Antennenbauteilen beschrieben, die einen Empfang aus drei Raumrichtungen ermöglichen, indem drei Wicklungen orthogonal zueinander um einen magnetischen Kern angeordnet sind.

Ein Anliegen der vorliegenden Erfindung ist es, ein Antennenbauelement bereitzustellen, das einen Signalempfang in drei Raumrichtungen ermöglicht, gute elektrische und mechanische Eigenschaften aufweist und zuverlässig betreibbar ist.

Eine Ausführungsform eines derartigen Antennenbauelements ist im Patentanspruch 1 angegeben. Weitere vorteilhafte Ausführungsformen werden in den abhängigen Patentansprüchen definiert.

Die Erfindung wird im Folgenden anhand von Figuren, die Ausführungsbeispiele der vorliegenden Erfindung zeigen, näher erläutert. Es zeigen:
Figur 1A eine Ausführungsform eines magnetischen Kerns eines Antennenbauelements,
Figur 1B eine weitere Ausführungsform eines magnetischen Kerns eines Antennenbauelements,
Figur 1C eine Ausführungsform eines Antennenbauelements,
Figur 2A eine Draufsicht auf eine Oberseite eines magnetischen Kerns eines Antennenbauelements,
Figur 2B eine Draufsicht auf eine Unterseite eines magnetischen Kerns eines Antennenbauelements,
Figur 2C eine Draufsicht auf eine Unterseite einer weiteren Ausführungsform eines magnetischen Kerns eines Antennenbauelements,
Figur 3 eine Queransicht auf eine Ausführungsform eines magnetischen Kerns eines Antennenbauelements,
Figur 4 einen Querschnitt durch eine Ausführungsform eines magnetischen Kerns eines Antennenbauelements,
Figur 5A eine Ausführungsform eines magnetischen Kerns eines Antennenbauelements mit großem Formfaktor,
Figur 5B ein Diagramm mit einer Permeabilität des magnetischen Kerns in Bezug auf die geometrische Form des Kerns,
Figur 6 eine Ausführungsform eines mit elektrischen Leitern bewickelten magnetischen Kerns eines Antennenbauelements mit einem Trägerelementen,
Figur 7A eine vergrößerte Darstellung einer Kontaktierung eines elektrischen Leiters bei einer ersten Ausführungsform des Antennenbauelements mit Trägerelementen,
Figur 7B eine vergrößerte Darstellung einer Kontaktierung eines elektrischen Leiters bei einer zweiten Ausführungsform des Antennenbauelements mit Trägerelementen,
Figur 8A eine Ausführungsform eines umpressten magnetischen Kerns mit Befestigung an Trägerelementen,
Figur 8B eine Ausführungsform eines umpressten magnetischen Kerns mit aus Trägerelementen ausgestanzten Kontaktelementen,
Figur 8C eine Ausführungsform eines umpressten magnetischen Kerns mit gebogenen Kontaktelementen,
Figur 9A eine Draufsicht auf eine Oberseite einer Ausführungsform eines Antennenbauelements,
Figur 9B eine Draufsicht auf eine Unterseite einer Ausführungsform eines Antennenbauelements,

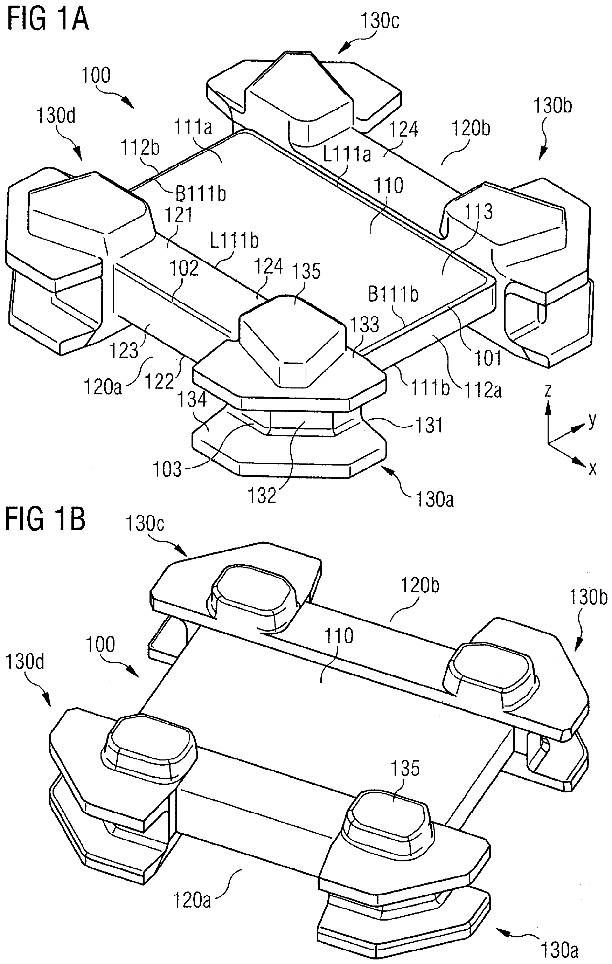

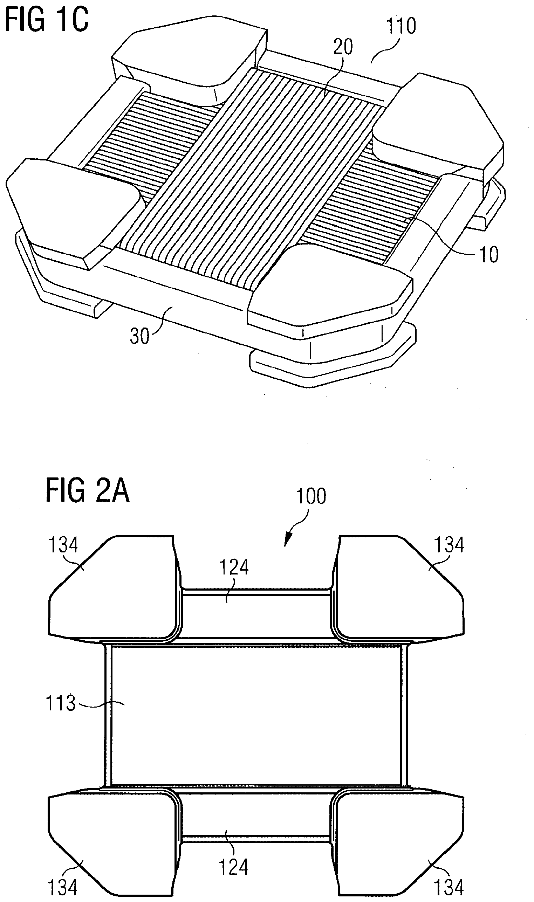

Die Figuren 1A und 1B zeigen eine Ansicht einer ersten und zweiten Ausführungsform eines magnetischen Kerns 100 eines Antennenbauelements von einer Unterseite. In Figur 1C ist der magnetische Kern gemäß der in den Figuren 1A und 1B gezeigten Ausgestaltungsformen von einer Oberseite dargestellt. Der magnetische Kern ist mit einem elektrischen Leiter 10, einem elektrischen Leiter 20 und einem elektrischen Leiter 30 bewickelt. Der magnetische Kern 100 zum Bewickeln mit den elektrischen Leitern 10, 20 und 30 ist als eine einstückige beziehungsweise einteilige Komponente ausgebildet. Die elektrischen Leiter sind orthogonal zueinander unmittelbar um den magnetischen Kern 100 gewickelt.

Der magnetische Kern 100 weist einen mittleren, quaderförmigen Abschnitt 110 mit einer oberen rechteckförmigen Seitenfläche 111a und einer unteren rechteckförmigen Seitenfläche 111b mit jeweils einer längeren Seite Lllla und einer dieser gegenüberliegenden längeren Seite Llllb sowie einer kürzeren Seite B111a und einer dieser gegenüberliegenden kürzeren Seite B111b auf. Wie in Figur 1C dargestellt ist, ist der elektrische Leiter 10 unmittelbar um den mittleren Abschnitt 110 des magnetischen Kerns derart gewickelt, dass der elektrische Leiter 10 parallel zu den längeren Seiten L111a, L111b der oberen und unteren Seitenfläche 111a, 111b des mittleren Abschnitts 110 des magnetischen Kerns 100 verläuft.

Der magnetische Kern 100 weist des Weiteren einen seitlichen Abschnitt 120a und einen seitlichen Abschnitt 120b auf. Der seitliche Abschnitt 120a ist an einem mittleren Teil der längeren Seite Lllla der oberen und unteren Seitenfläche 111a, 111b des mittleren Abschnitts 110 des magnetischen Kerns angeordnet. Der seitliche Abschnitt 120b ist an einem mittleren Teil der zweiten längeren Seite Llllb der oberen und unteren Seitenfläche 111a, 111b des mittleren Abschnitts 110 des magnetischen Kerns 100 angeordnet. Der elektrische Leiter 20 ist unmittelbar um den seitlichen Abschnitt 120a und den seitlichen Abschnitt 120b des magnetischen Kerns 100 derart gewickelt, dass der elektrische Leiter 20 über dem elektrischen Leiter 10 angeordnet und orthogonal zu dem elektrischen Leiter 10 verläuft, wie dies in Figur 1C dargestellt ist.

Der magnetische Kern 100 umfasst des Weiteren Führungsabschnitte 130a, 130b, 130c und 130d mit jeweils einem Kanal 131 zum Führen des elektrischen Leiters 30 um den magnetischen Kern 100. Die Führungsabschnitte 130a, ..., 130d sind derart ausgebildet, dass der elektrische Leiter 30 orthogonal zu den elektrischen Leitern 10 und 20 verläuft, wie in Figur 1C dargestellt ist. Der elektrische Leiter 30 ist umfänglich um den magnetischen Kern 100 angeordnet.

Der mittlere Abschnitt 110 des magnetischen Kerns 100 weist neben der oberen und unteren Seitenfläche 111a, 111b eine mittlere Seitenfläche 112a und eine mittlere Seitenfläche 112b auf. Die beiden mittleren Seitenflächen 112a, 112b des mittleren Abschnitts 110 des magnetischen Kerns sind zwischen den kürzeren Seiten B111a, B111b der oberen und unteren Seitenfläche 111a und 111b des mittleren Abschnitts 110 des magnetischen Kerns angeordnet. Der elektrische Leiter 10 ist unmittelbar um die obere und untere Seitenfläche 111a, 111b und die dazwischen angeordneten mittleren Seitenflächen 112a, 112b des mittleren Abschnitts 110 des magnetischen Kerns 100 gewickelt und stellt die Wicklung in y-Richtung dar.

Die beiden seitlichen Abschnitte 120a und 120b des magnetischen Kerns weisen jeweils eine obere Seitenflächen 121 und eine untere Seitenfläche 122 sowie eine dazwischen angeordnete mittlere Seitenfläche 123 auf. Der elektrische Leiter 20 ist unmittelbar auf der jeweiligen oberen Seitenfläche 121, der mittleren Seitenfläche 123 sowie der unteren Seitenfläche 122 der beiden seitlichen Abschnitte 120 des magnetischen Kerns 100 angeordnet und stellt die Wicklung in x-Richtung dar.

Die obere Seitenfläche 111a des mittleren Abschnitts 110 des magnetischen Kerns 100 ist parallel zu der jeweiligen oberen Seitenfläche 121 der beiden seitlichen Abschnitte 120a und 120b des magnetischen Kerns angeordnet. Ebenso ist die untere Seitenfläche 111B des mittleren Abschnitts 110 des magnetischen Kerns 100 parallel zu der jeweiligen unteren Seitenfläche 122 der beiden seitlichen Abschnitte 120a und 120b des magnetischen Kerns angeordnet. Eine Höhe des magnetischen Kerns zwischen der oberen Seitenfläche 111a und der unteren Seitenfläche 111b des mittleren Abschnitts 110 des magnetischen Kerns ist kleiner als eine Höhe des magnetischen Kerns zwischen der jeweiligen oberen und unteren Seitenfläche 121 und 122 der seitlichen Abschnitte 120a, 120b des magnetischen Kerns.

Die Führungsabschnitte 130a, ..., 130d zur Führung des elektrischen Leiters 30 sind an den Ecken des magnetischen Kerns 100 zwischen jeweils einem der seitlichen Abschnitte 120a, 120b des magnetischen Kerns und den mittleren Seitenflächen 112a, 112b des mittleren Abschnitts 110 des magnetischen Kerns angeordnet. Jeder der Führungsabschnitte 130a, ..., 130d weist einen Kanal 131 zum Führen des elektrischen Leiters 30 auf. Der jeweilige Kanal 131 der Führungsabschnitte 130a, ..., 130d des magnetischen Kerns ist derart geformt, dass der elektrische Leiter 30 durch den Kanal 131 um die Ecken des magnetischen Kerns 100 und somit um den Umfang des magnetischen Kerns geführt ist.

Gemäß einer möglichen Ausführungsform weist jeder der Kanäle 131 der Führungsabschnitte 130a, ..., 130d eine Bodenflächen 132 und seitlich dazu angeordnete Seitenwände 133 und 134 auf. Der elektrische Leiter 30 ist unmittelbar auf der Bodenfläche 132 des jeweiligen Kanals 131 der Führungsabschnitte 130a, ..., 130d angeordnet. Die jeweilige Bodenfläche 132 der Kanäle 131 der Führungsabschnitte 130a, ..., 130d ist derart geformt, dass der elektrische Leiter 30 entlang der jeweiligen mittleren Seitenfläche 123 der seitlichen Abschnitte 120a, 120b des magnetischen Kerns um die Ecken des magnetischen Kerns 100 und entlang der mittleren Seitenflächen 112a, 112b des mittleren Abschnitts 110 des magnetischen Kerns geführt ist.

Die jeweilige Bodenfläche 132 der Kanäle 131 der Führungseinrichtung 130a, ..., 130d ist in einer Ebene über der jeweiligen mittleren Seitenfläche 123 der seitlichen Abschnitte 120a, 120b des magnetischen Kerns angeordnet. Des Weiteren ist die jeweilige Bodenfläche 132 der Kanäle 131 der Führungseinrichtung 130a, ..., 130d in einer Ebene über den mittleren Seitenflächen 112a und 112b des mittleren Abschnitts 110 des magnetischen Kerns angeordnet.

Bei dem vorliegenden Antennenbauelement weist der magnetische Kern 100 ein Ferritmaterial mit einer hohen Dichte auf. Das Ferritmaterial hat beispielsweise eine Dichte zwischen 4600 kg/m³ und 6000 kg/m³ und eine Druckfestigkeit zwischen 200 N/mm² und 700 N/mm². Anstelle des üblicherweise für Ferritkerne verwendeten Verpressens von Schichten wird der magnetische Kern des Antennenbauelements vorzugsweise durch ein Injektionsverfahren hergestellt. Das Injektionsverfahren ermöglicht es, den magnetischen Kern mit der in Figur 1A gezeigten Ausgestaltung zu fertigen ohne dass dazu mechanische Prozesse, beispielsweise ein Einschleifen oder Polieren, notwendig sind. Dadurch ist der magnetische Kern mechanisch deutlich robuster als magnetische Kerne, die mit einem üblichen Pressverfahren hergestellt worden sind.

Durch Verwendung des Injektionsverfahrens wird es vorteilhaft ermöglicht, Kanten 101 zwischen den oberen/unteren Seitenflächen 111a/111b und den mittleren Seitenflächen 112a, 112b des magnetischen Kerns zu verrunden. Ebenso sind Kanten 102 zwischen den jeweiligen Seitenflächen 121, 122 und 123 der seitlichen Abschnitte 120a und 120b des magnetischen Kerns verrundet. Darüber hinaus sind Kanten 103 zwischen der jeweiligen Bodenfläche 132 und den Seitenwänden 133, 134 der Kanäle 131 der Führungsabschnitte 130a, ..., 130d verrundet ausgebildet. Durch das Vermeiden von scharfkantigen Übergängen zwischen den Seitenflächen können beim Bewickeln des mittleren Abschnitts 110 mit dem elektrischen Leiter 10 sowie der seitlichen Abschnitte 120a, 120b mit dem elektrischen Leiter 20 und beim Bewickeln der Kanäle 131 der Führungsabschnitte 130a, ..., 130d mit den elektrischen Leitern 30 Beschädigungen am Drahtmaterial der elektrischen Leiter vermieden werden.

Indem der mittlere Abschnitt 110 sowie die daran seitlich angeordneten Abschnitte 120a und 120b des magnetischen Kerns unterschiedliche Höhe aufweisen, wird zum unmittelbaren Bewickeln des mittleren Abschnitts 110 des magnetischen Kerns mit dem elektrischen Leiter 10 ein breiter Graben/Kanal 113 gebildet. Ebenso wird durch die an den Stirnseiten der seitlichen Abschnitte 120a und 120b des magnetischen Kerns angeordneten Führungsabschnitte 130a, ..., 130d ein breiter Graben/Kanal 124 zum unmittelbaren Bewickeln der seitlichen Abschnitte 120a und 120b mit dem elektrischen Leiter 20 gebildet. Die Führungseinrichtungen 130a, ..., 130d sind selbst kanalförmig ausgebildet, wobei der dadurch gebildete Kanal/Graben 131 schmäler als die Gräben 113 beziehungsweise 124 ist. Die Gräben/Kanäle für die elektrischen Leiter 10, 20 und 30 ermöglichen eine niedrige induktive Kopplung zwischen den drei Wicklungen 10, 20 und 30 der elektrischen Leiter.

Die Seitenwände 133, 134 der Führungsabschnitte 130a, ..., 130d sind besonders dünn ausgebildet, wodurch der zur Verfügung stehende Platz zum Bewickeln des magnetischen Kerns mit dem elektrischen Leiter 30, vergrößert wird. Die Seitenwände weisen beispielsweise eine Dicke von 0,3 mm bis 0,6mm, vorzugsweise eine Dicke von 0,4 mm, auf. Aufgrund der hohen Dichte des Materials des Kerns weisen die Führungsabschnitte 130a, ..., 130d trotz der dünnen Seitenwände 133, 134 gute mechanische Eigenschaften auf und sind insbesondere ausreichend mechanisch stabil, um nicht beschädigt zu werden.

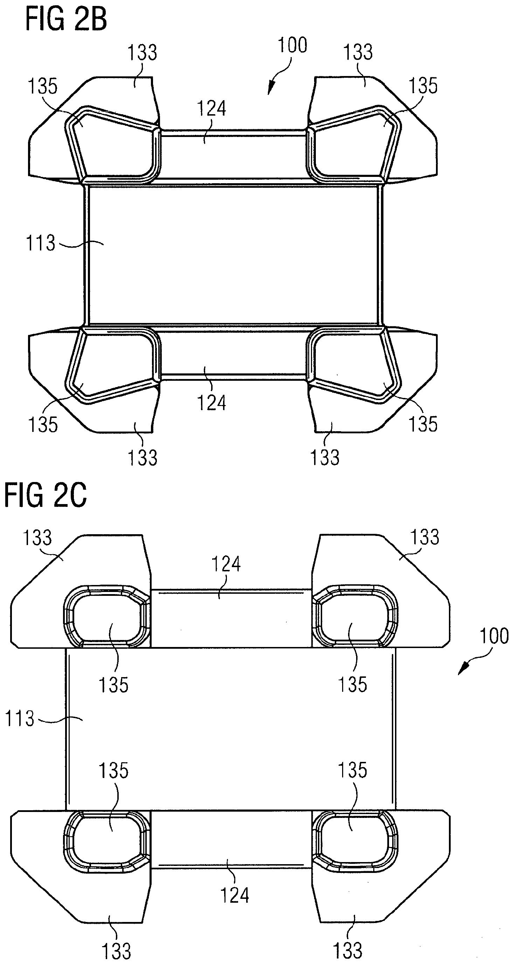

Figur 2A zeigt eine Draufsicht auf eine Oberseite des unbewickelten magnetischen Kerns 100. Figur 2B zeigt eine Draufsicht auf eine Unterseite des unbewickelten magnetischen Kerns 100 der Figur 1A und Figur 2C zeigt eine Draufsicht auf eine Unterseite des unbewickelten magnetischen Kerns 100 der Figur 1B. Zu erkennen ist der Kanal/Graben 113 zum Bewickeln des Kerns mit dem elektrischen Leiter 10 in y-Richtung und der Kanal/Graben 124 zum Bewickeln des magnetischen Leiters in x-Richtung. Wie anhand der Figuren 2A, 2B und 2C ersichtlich ist, ist der magnetische Kern in z-Richtung nicht symmetrisch ausgebildet. Auf den äußeren Seitenwänden 133 der Kanäle 131 jeder der Führungsabschnitte 130a, ..., 130d ist jeweils ein Vorsprung 135 angeordnet. Die Seitenwände 134 der Kanäle 131 der Führungsabschnitte 130a, ..., 130d weisen keinen Vorsprung auf, sondern sind an ihrer äußeren Oberfläche eben ausgeführt.

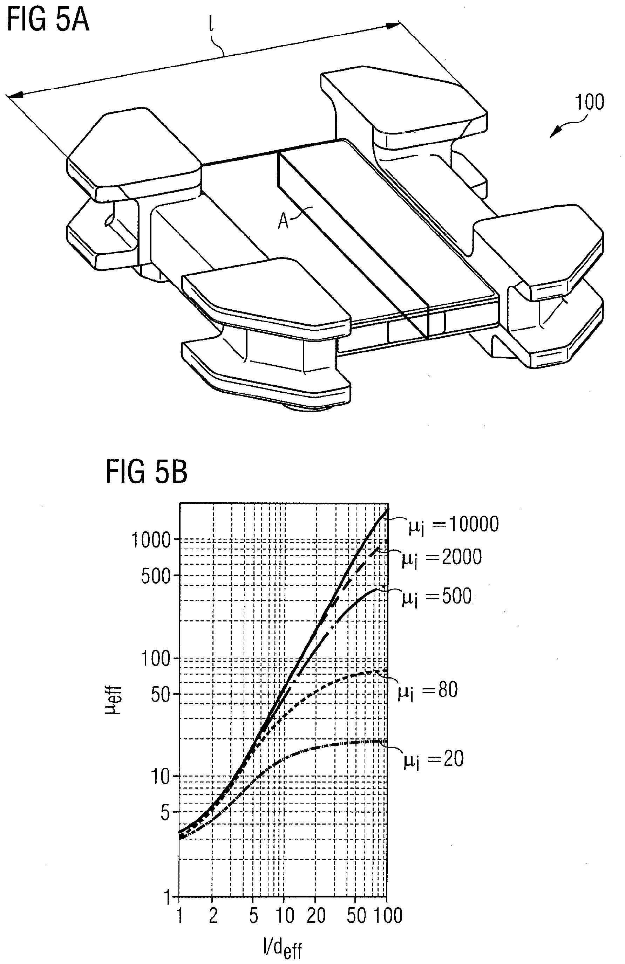

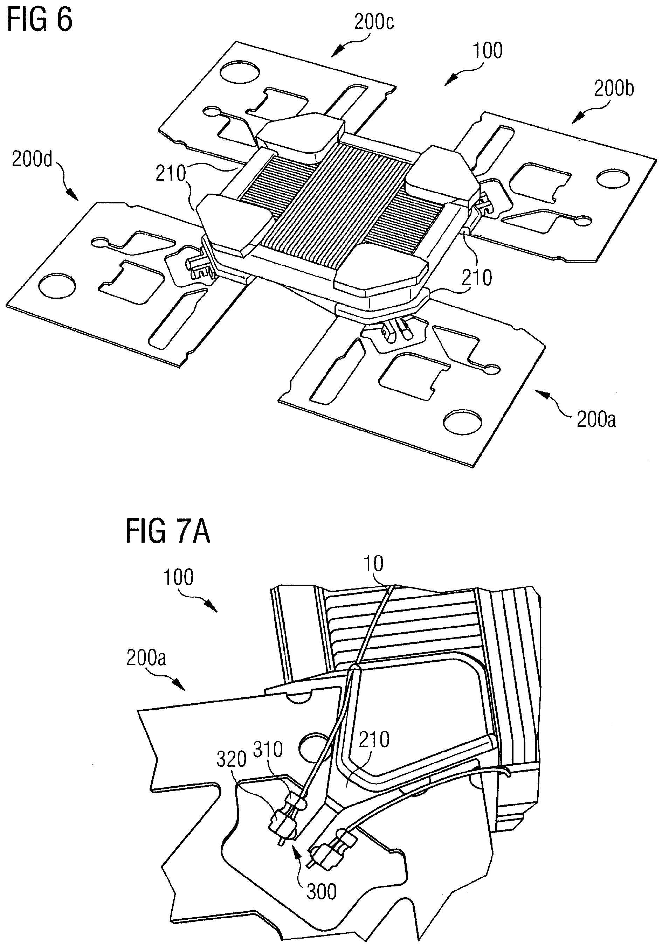

Wie bei einem Vergleich der Figuren 1A und 1B als auch der Figuren 2B und 2C ersichtlich wird, sind die Vorsprünge 135 bei der in den Figuren 1A, 2B gezeigten Ausführungsform anders als bei der in den Figuren 1B, 2C gezeigten Ausführungsform ausgebildet. Bei der in den Figuren 1A und 2B gezeigten Ausführungsform des Kerns haben die Vorsprünge in der Draufsicht einen näherungsweise dreieckförmigen Umriss, während die Vorsprünge der in den Figuren 1B und 2C gezeigten Ausführungsform des Kerns in der Draufsicht einen ovalen Umriss haben. Bei der in den Figuren 1A und 2B gezeigten Ausführungsform des Kerns verlaufen die Kanten der Vorsprünge 135 schräg zu den Seitenflächen 123 und 112a, 112b, während die Kanten der Vorsprünge 135 bei der in den Figuren 1B und 2C gezeigten Ausführungsform des Kerns parallel zu den Seitenflächen 123 und 112a, 122b verlaufen. Die technische Bedeutung der Vorsprünge 135 wird weiter unten anhand der Figuren 5 und 6 näher erläutert.

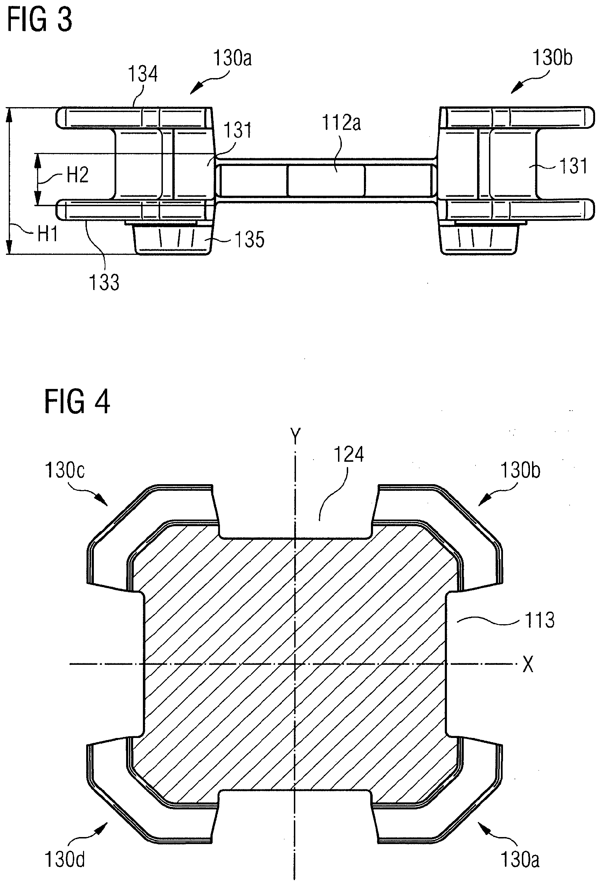

Figur 3 zeigt eine Seitenansicht des magnetischen Kerns 100 des Antennenbauelements. Der mittlere Abschnitt 110 des magnetischen Kerns weist in z-Richtung beispielsweise eine Höhe B von 0,9 mm auf. Die Führungsabschnitte 130a, ..., 130d weisen in z-Richtung beispielsweise eine Höhe A von 2,9 mm auf. Der magnetische Kern 100 ist derart ausgebildet, dass ein Verhältnis der Höhe A zwischen dem Vorsprung 135 des magnetischen Kerns und der Seitenwand 134 jedes der Führungsabschnitte 130a, ..., 130d und der Höhe B zwischen der oberen und unteren Seitenfläche 111a und 111b des mittleren Abschnitts 110 des magnetischen Kerns mindestens größer als 3 ist.

Figur 4 zeigt einen Querschnitt durch den magnetischen Kern 100 des Antennenbauelements. Dargestellt sind die orthogonal zueinander angeordneten Gräben/Kanäle 113 und 124 zum Bewickeln des magnetischen Kerns mit den elektrischen Leitern 10 und 20 sowie der um den äußeren Umfang verlaufende Graben/Kanal 131 zum Bewickeln des magnetischen Kerns mit dem elektrischen Leiter 30. Die Gräben sind rechtwinklig zueinander angeordnet, so dass auch die elektrischen Leiter 10, 20 und 30 orthogonal zueinander angeordnet sind und ein Empfangen von Signalen in sämtlichen drei Raumrichtungen ermöglicht ist.

Wie anhand von Figur 4 deutlich wird, weist der magnetische Kern im dargestellten Schnitt eine große rechteckige Querschnittsfläche, die in Figur 4 schraffiert dargestellt ist, auf. Insbesondere der mittlere Abschnitt 110 des magnetischen Kerns ist in der Draufsicht rechteckförmig ausgebildet. Somit sind auch die entlang der Seitenflächen 112a, 112b des mittleren Abschnitts 110 des Kerns und die entlang der Seitenflächen 123 der seitlichen Abschnitte 120a, 120b des Kerns angeordneten elektrischen Leiter 30 rechteckförmig um den Kern gewickelt.

Trotz der geringen Höhe des magnetischen Kerns in z-Richtung ermöglicht der große Querschnitt des Kerns in x- und y-Richtung, das Gesamtvolumen des Kerns zu erhöhen. Aufgrund der aus den Figuren 3 und 4 ersichtlichen rechteckigen Querschnittsform des magnetischen Kerns mit niedriger Höhe wird die Empfindlichkeit des Bauelements gegenüber einer runden Querschnittsform um 20 % bis 30% verbessert. Die in die elektrischen Leiter 10, 20 und 30 unter magnetischer Feldeinwirkung induzierte Spannung ist um ca. 30% verbessert. Der Q-Faktor des Antennenbauelements beträgt beispielsweise bei 125 kHz zwischen 20 und 50 für den 6,75 mH Typ. Der Gleichspannungswiderstand des Antennenbauelements weist beispielsweise für den 6,75 mH Typ Werte zwischen 50 Ohm und 120 Ohm auf.

Die Ermittlung der Empfindlichkeit des Antennenbauelements in Abhängigkeit von der Geometrie des magnetischen Kerns 100 wird im Folgenden anhand der Figuren 5A und 5B erläutert. Figur 5A zeigt den magnetischen Kern 100 mit der Länge l und der Querschnittsfläche A. Die Empfindlichkeit S einer Spule lässt sich allgemein mit der Formel *S∼ω·N·A·µ_{eff}* berechnen, wobei N die Anzahl der Windungen welche aus der Induktivität festgelegt ist, A die Querschnittsfläche des Kerns und *ω* die Kreisfrequenz bedeuten. Die effektive Permeabilität µ_{eff} lässt sich in Abhängigkeit von der Länge l und dem Durchmesser D des magnetischen Kerns mit Hilfe des in Figur 5B dargestellten Diagramms ermitteln. Da sich der oben genannte Formelzusammenhang auf einen zylinderförmigen Kern bezieht, ist von der in Figur 5A dargestellten Querschnittsfläche A ein äquivalenter Durchmesser d_{eff} zu ermitteln. Mit der Länge l und dem äquivalenten Durchmesser d_{eff} lässt sich aus dem Diagramm der Figur 5B die Permeabilität µ_{eff} des Kerns ermitteln. Für den magentischen Kern 100 ist das Verhältnis zwischen der Länge l des Kerns und der Querschnittsfläche A des mittleren Abschnitts 110 des magnetischen Kerns derart gewählt, dass der magnetische Kern eine Empfindlichkeit für den 6,75 mH Typ zum Beispiel zwischen 65 und 85 mV/µT aufweist.

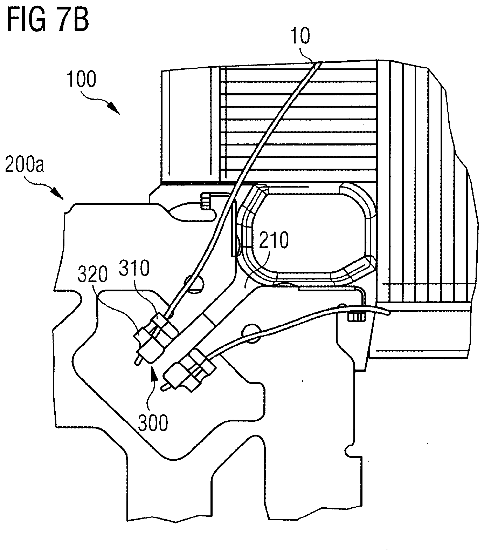

Figur 6 zeigt eine Ausführungsform des mit den elektrischen Leitern 10, 20 und 30 bewickelten magnetischen Kerns 100, der auf Trägerelementen 200a, 200b, 200c und 200d befestigt ist. Die Trägerelemente können beispielsweise Teil eines Trägerbandes sein. Jedes Trägerelement weist an einer seiner Kanten eine Aussparung 210 auf, die im Ausschnitt der Figuren 7A und 7B deutlicher zu erkennen ist. Die Vorsprünge 135 der Führungsabschnitte 130a, ..., 130d sind zum Einsetzen in die jeweilige Aussparung 210 der Trägerelemente 200a, ..., 200d ausgebildet. Die Vorsprünge 135 des magnetischen Kerns 100 und die jeweilige Aussparung 210 der Trägerelemente 200a, ..., 200d sind insbesondere derart ausgebildet, dass der magnetische Kern 100 nach dem Einsetzen der Vorsprünge 135 in die jeweilige Aussparung 210 der Trägerelemente 200a, ..., 200d an den Trägerelementen ausgerichtet ist. Dadurch kann der magnetische Kern 100 beispielsweise zentriert zu den Trägerelementen 200a, ..., 200d angeordnet werden. Aufgrund der Vorsprünge 135 kann der magentische Kerns insbesondere mit enger Toleranz automatisiert zu den Trägerelementen 200a, ..., 200d ausgerichtet werden.

Die Figuren 7A und 7B zeigen einen Ausschnitt der in Figur 6 dargestellten Anordnung des magnetischen Kerns 100 und des Trägerelements 200a in einer vergrößerten Ansicht. Figur 7A zeigt den in Figur 1A dargestellten magnetischen Kern und Figur 7B zeigt den in Figur 1B gezeigten magnetischen Kern. Der magnetische Kern ist mit einem seiner Vorsprünge 135 in die Aussparung 210 des Trägerelements 200a eingesetzt. Zum Kontaktieren der elektrischen Leiter 10, 20 und 30 mit den Trägerelementen weist jedes Trägerelement 200a, ..., 200d Anschlusskontakte 300 auf. Jeder der Anschlusskontakte 300 kann eine Klemmeinrichtung 310 zum Klemmen eines der elektrischen Leiter 10, 20, 30 und eine Kontaktierungseinrichtung 320 zum elektrischen Kontaktieren des zuvor eingeklemmten elektrischen Leiters aufweisen. Zum elektrischen Kontaktieren wird ein Ende des elektrischen Leiters zunächst in der Klemmeinrichtung 310 festgeklemmt bevor das Ende des elektrischen Leiters an der Kontaktierungseinrichtung 320 mit dem Trägerelement verlötet beziehungsweise verschweißt wird. Die Klemmeinrichtung 310 ist in unmittelbarer Nähe der Kontaktierungseinrichtung 320 der Anschlusskontakte 300 vorgesehen. Dadurch können elektrische Unterbrechungen, die häufig durch Drahtbruch an den Anschlusskontakten auftreten, bei dem Antennenbauelement weitgehend vermieden werden.

Gemäß einer bevorzugten Ausführungsform des Antennenbauelements weist die Isolation des elektrischen Leiters 10, 20 und 30 ein hochtemperaturbeständiges Material auf. Die elektrischen Leiter können aus einem Material bestehen, das beispielsweise mehr als 20 Zyklen eines Reflow-Lötprozesses mit Spitzentemperaturen von bis zu 260° C standhält. Für die elektrischen Leiter kann ein Material mit einer Erweichungstemperatur von größer als 350° C für 0.05 mm beziehungsweise 0,25 mm nach IEC 60851.6.4 verwendet werden. Die Isolation des elektrischen Leiters kann beispielsweise ein Material aus Polyamidimid enthalten beziehungsweise komplett aus Polyamidimid bestehen.

Die elektrischen Leiter weisen eine Schutz- beziehungsweise Isolierschicht auf, die bis zu einer Temperatur von 600° C temperaturbeständig ist. Dadurch kann die Schutzschicht der elektrischen Leiter nicht beim Verlöten beziehungsweise Verschweißen mit den Trägerelementen abgelöst werden, so dass Kurzschlüsse zwischen den elektrischen Leitern vermieden werden können. Das Abisolieren der elektrischen Leiter erfolgt mechanisch oder mittels Lasertechnologie.

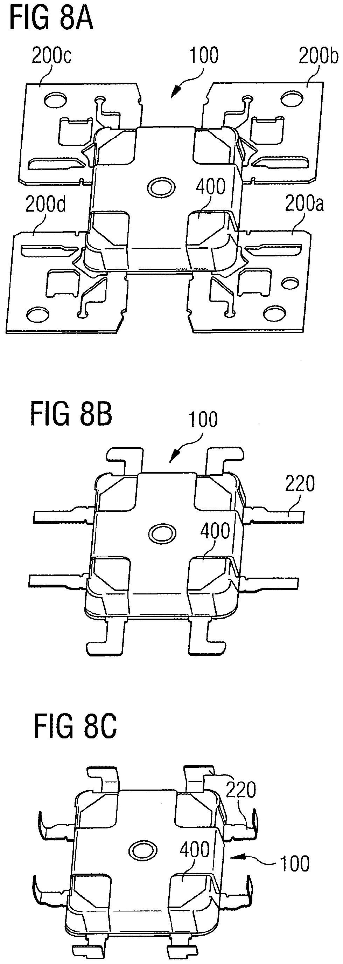

Zum Fertigstellen des Antennenbauelements wird der mit den elektrischen Leitern 10, 20 und 30 bewickelte magnetische Kern 100 mit einem Vergussmaterial 400 umgeben. Figur 8A zeigt den auf dem Trägerelementen 200a, ..., 200d angeordneten und mit dem Vergussmaterial 400 umgebenen und umpressten magnetischen Kern 100. Die dünnen Seitenwände 133, 134 der Führungsabschnitte 130a, ..., 130d ermöglichen es, dass genügend Platz zum Vergießen mit dem Vergussmaterial 400 vorhanden ist. Durch das Vergussmaterial 400 sind der magentische Kern 100 als auch die ihn umgebenden elektrischen Leiter vor mechanischem Stress geschützt.

Zur Herstellung von äußeren Kontaktanschlüssen beziehungsweise Kontaktpins werden aus den Trägerelementen entsprechende Kontaktelemente ausgeschnitten beziehungsweise ausgestanzt. Figur 8B zeigt die aus den Trägerelementen ausgeschnittenen Kontaktelemente 220. Zum Ermöglichen einer geeigneten äußeren Kontaktierung werden die Kontaktelemente an ihren äußeren Enden, wie in Figur 8C dargestellt ist, verbogen. Die Kontaktelemente 220 werden anschließend um den umpressten Kern gebogen.

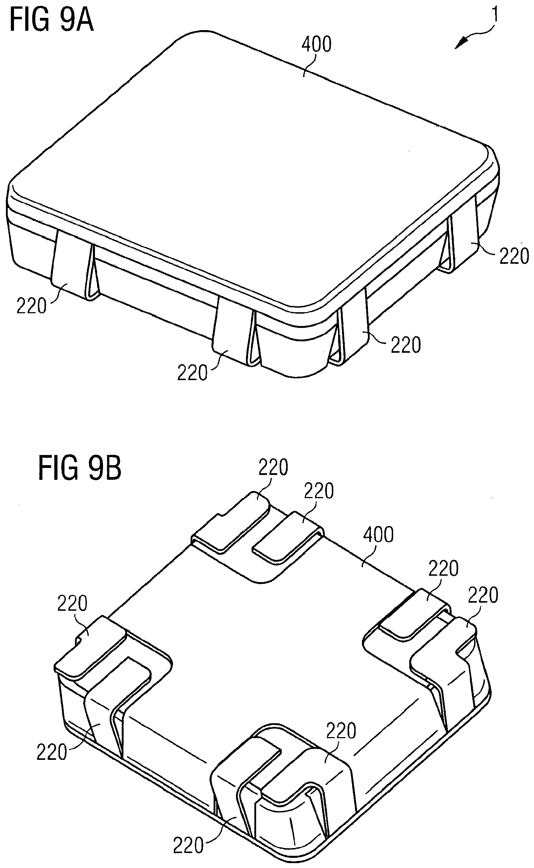

Das fertige Antennenbauelement 1 ist in Figur 9A von einer Oberseite und in Figur 9B von einer Unterseite gezeigt. Die Kontaktelemente 220 stellen zur elektrischen Kontaktierung auf der Unterseite des vergossenen magnetischen Kerns leitfähige Anschlussflächen bereit.

### Bezugszeichenliste

- 1: Antennenbauelement
- 10: elektrische Leiter
- 20: elektrische Leiter
- 30: elektrische Leiter
- 100: magnetischer Kern
- 110: mittlerer Abschnitt des magnetischen Kerns
- 120: seitliche Abschnitte des magnetischen Kerns
- 130: Führungsabschnitte des magnetischen Kerns
- 200a, ..., 200d: Trägerelemente
- 210: Aussparungen eines Trägerelements
- 220: Kontaktelement
- 300: Anschlusskontakt
- 310: Klemmeinrichtung
- 320: Kontaktierungseinrichtung
- 400: Vergussmaterial

## Patentansprüche

1. Antennenbauelement, umfassend:
- einen ersten, zweiten und dritten elektrischen Leiter (10, 20, 30),
- einen magnetischen Kern (100) zum Bewickeln mit den elektrischen Leitern (10, 20, 30), wobei der magnetische Kern (100) einstückig ausgebildet ist,
- mindestens ein Trägerelement (200a, 200b, 200c, 200d) zum Befestigen des magnetischen Kerns (100), wobei das mindestens eine Trägerelement eine Aussparungen (210) aufweist,
- wobei der magnetische Kern (100) einen mittleren quaderförmigen Abschnitt (110) mit einer oberen und unteren rechteckförmigen Seitenfläche (111a, 111b) mit jeweils einer ersten und zweiten längeren Seite (L111a, L111b) und einer ersten und zweiten kürzeren Seite (B111a, B111b) aufweist,
- wobei der erste elektrische Leiter (10) unmittelbar um den mittleren Abschnitt (110) des magnetischen Kerns (100) derart gewickelt ist, dass der erste elektrische Leiter (10) parallel zu der ersten und zweiten längeren Seite (L111a, L111b) der oberen und unteren Seitenfläche (111a, 111b) des mittleren Abschnitts (110) des magnetischen Kerns (100) verläuft,
- wobei der magnetische Kern (100) einen ersten und zweiten seitlichen Abschnitt (120a, 120b) aufweist, wobei der erste seitliche Abschnitt (120a) an einem mittleren Teil der ersten längeren Seite (L111a) der oberen und unteren Seitenfläche (111a, 111b) des mittleren Abschnitts (110) des magnetischen Kerns und der zweite seitliche Abschnitt (120b) an einem mittleren Teil der zweiten längeren Seite (L111b) der oberen und unteren Seitenfläche (111a, 111b) des mittleren Abschnitts (110) des magnetischen Kerns (100) angeordnet ist,
- wobei der zweite elektrische Leiter (20) unmittelbar um den ersten und zweiten seitlichen Abschnitt (120a, 120b) des magnetischen Kerns derart gewickelt ist, dass der zweite elektrische Leiter (20) über dem ersten elektrischen Leiter (10) angeordnet und orthogonal zu dem ersten elektrischen Leiter (10) verläuft,
- wobei der magnetische Kern mehrere Führungsabschnitte (130a, 130b, 130c, 130d) mit jeweils einem Kanal (131) zum Führen des dritten elektrischen Leiters (30) um den magnetischen Kern (100) aufweist, wobei die Führungsabschnitte (130a, 130b, 130c, 130d) derart ausgebildet sind, dass der dritte elektrische Leiter (30) orthogonal zu dem ersten und zweiten elektrischen Leiter (10, 20) verläuft,
- wobei jeder der Kanäle (131) der Führungsabschnitte (130a, ..., 130d) eine Bodenfläche (132) und dazu seitlich angeordnete Seitenwänden (133, 134) aufweist,
- wobei auf einer äußeren Oberfläche einer ersten der jeweiligen Seitenwände (133) der Kanäle (131) jeder der Führungsabschnitte (130a, ..., 130d) ein Vorsprung (135) ausgebildet zum Einsetzen in die Aussparungen (210) des mindestens einen Trägerelements (200a, ..., 200d) angeordnet ist,
- wobei die jeweiligen Vorsprünge (135) des magnetischen Kerns und die Aussparung (210) des mindestens einen Trägerelements (200a, ..., 200d) derart ausgebildet sind, dass der magnetische Kern (100) nach dem Einsetzten der Vorsprünge (135) des magnetischen Kerns in die Aussparung (210) des mindestens einen Trägerelements (200a, ..., 200d) an dem mindestens einen Trägerelement ausgerichtet ist.

2. Antennenbauelement nach Anspruch 1,
- wobei der mittlere Abschnitt (110) des magnetischen Kerns eine erste und zweite mittlere Seitenfläche (112a, 112b) aufweist, die zwischen den kürzeren ersten und zweiten Seiten (B111a, B111b) der oberen und unteren Seitenfläche (111a, 111b) des mittleren Abschnitts (110) des magnetischen Kerns angeordnet ist,
- wobei der erste elektrische Leiter (10) unmittelbar um die obere und untere Seitenfläche (lila, 111b) und die dazwischen angeordnete erste und zweite Seitenfläche (112a, 112b) des mittleren Abschnitts (110) des magnetischen Kerns gewickelt ist.

3. Antennenbauelement nach einem der Ansprüche 1 oder 2,
- wobei der erste und zweite seitliche Abschnitt (120a, 120b) des magnetischen Kerns jeweils eine obere und untere Seitenfläche (121, 122) und eine dazwischen angeordnete mittlere Seitenfläche (123) aufweist,
- wobei der zweite elektrische Leiter (20) unmittelbar auf der jeweiligen oberen, unteren und mittleren Seitenfläche (121, 122, 123) des ersten und zweiten seitlichen Abschnitts (120) des magnetischen Kerns (100) angeordnet ist.

4. Antennenbauelement nach Anspruch 3,
- wobei die obere Seitenfläche (lila) des mittleren Abschnitts (110) des magnetischen Kerns (100) parallel zu der jeweiligen oberen Seitenfläche (121) der seitlichen Abschnitte (120a, 120b) des magnetischen Kerns (100) angeordnet ist,
- wobei die untere Seitenfläche (111b) des mittleren Abschnitts (110) des magnetischen Kerns (100) parallel zu der jeweiligen unteren Seitenfläche (122) der seitlichen Abschnitte (120a, 120b) des magnetischen Kerns angeordnet ist,
- wobei eine Höhe des magnetischen Kerns zwischen der oberen und unteren Seitenfläche (111a, 111b) des mittleren Abschnitts (110) des magnetischen Kerns kleiner als eine Höhe des magnetischen Kerns zwischen der jeweiligen oberen und unteren Seitenfläche (121, 122) der seitlichen Abschnitte (120a, 120b) des magnetischen Kerns ist.

5. Antennenbauelement nach einem der Ansprüche 2 bis 4,
- wobei die mehreren Führungsabschnitte (130a, ..., 130d) an den Ecken des magnetische Kerns (100) zwischen den ersten und zweiten seitlichen Abschnitten (120a, 120b) des magnetischen Kerns und den mittleren Seitenflächen (112a, 112b) des mittleren Abschnitts (120) des magnetischen Kerns angeordnet sind,
- wobei jeder der Führungsabschnitte (130a, ..., 130d) einen Kanal (131) aufweist, der derart geformt ist, dass der dritte elektrische Leiter (30) durch den Kanal (131) um die Ecken des magnetischen Kerns (100) geführt ist.

6. Antennenbauelement nach Anspruch 5,
- wobei der dritte elektrische Leiter (30) unmittelbar auf der Bodenfläche (132) des jeweiligen Kanals (131) der Führungsabschnitte (130a, ..., 130d) angeordnet ist,
- wobei die jeweilige Bodenfläche (132) der Kanäle (131) der Führungsabschnitte (130a, ..., 130d) derart geformt ist, dass der dritte elektrische Leiter (30) entlang der jeweiligen mittleren Seitenfläche (123) der seitlichen Abschnitte (120a, 120b) des magnetischen Kerns um die Ecken des magnetischen Kerns (100) und entlang der ersten und zweiten mittleren Seitenfläche (112a, 112b) des mittleren Abschnitts (110) des magnetischen Kerns geführt ist.

7. Antennenbauelement nach Anspruch 6,
wobei die jeweilige Bodenfläche (132) der Kanäle (131) der Führungsabschnitte (130a, ..., 130d) in einer Ebene über der jeweiligen mittleren Seitenfläche (123) der seitlichen Abschnitte (120a, 120b) des magnetischen Kerns und über der ersten und zweiten mittleren Seitenfläche (112a, 112b) des mittleren Abschnitts (110) des magnetischen Kerns angeordnet ist.

8. Antennenbauelement nach einem der Ansprüche 1 bis 7, umfassend:
- mehrere Anschlusskontakte (300) zum Kontaktieren des ersten, zweiten und dritten elektrischen Leiters (10, 20, 30) mit dem mindestens einen Trägerelement (200a, ..., 200d),
- wobei jeder der Anschlusskontakte (300) eine Klemmeinrichtung (310) zum Klemmen eines der elektrischen Leiter (10, 20, 30) und eine Kontaktierungseinrichtung (320) zum elektrischen Kontaktieren des einen der elektrischen Leiter (10, 20, 30) aufweist.

9. Antennenbauelement nach einem der Ansprüche 1 bis 8, wobei der magnetische Kern (100) und die elektrischen Leiter (10, 20, 30) von einem Vergussmaterial (400) umgeben sind.

10. Antennenbauelement nach einem der Ansprüche 1 bis 9,
- wobei eine jeweilige zweite der Seitenwände (134) der Kanäle (131) der Führungsabschnitte (130a, ..., 130d) keinen Vorsprung aufweist,
- wobei ein Verhältnis der Höhe (H1) zwischen dem Vorsprung (135) des magnetischen Kerns und der zweiten Seitenwand (134) jedes der Führungsabschnitte (130a, ..., 130d) und der Höhe (H2) zwischen der oberen und unteren Seitenfläche (111a, 111b) des mittleren Abschnitts (110) des magnetischen Kerns (100) mindestens größer als 3 ist.

11. Antennenbauelement nach einem der Ansprüche 1 bis 10, wobei Kanten (101) zwischen den Seitenflächen (111a, 111b, 112a, 112b) des mittleren Abschnitts (110) des magnetischen Kerns und Kanten (102) zwischen den jeweiligen Seitenflächen (121, 122, 123) der seitlichen Abschnitte (120a, 120b) des magnetischen Kerns verrundet sind.

12. Antennenbauelement nach einem der Ansprüche 1 bis 11,
wobei der magnetische Kern (100) ein Ferritmaterial mit einer Dichte zwischen 4600 kg/m³ und 6000 kg/m³ und eine Druckfestigkeit zwischen 200 N/mm² und 700 N/mm² aufweist.

## Claims

1. Antenna component comprising:
- a first, second and third electrical conductor (10, 20, 30),
- a magnetic core (100) for winding with the electrical conductors (10, 20, 30), wherein the magnetic core (100) is embodied integrally,
- at least one carrier element (200a, 200b, 200c, 200d) for attaching the magnetic core (100), wherein the at least one carrier element has a recess (210),
- wherein the magnetic core (100) has a central cuboid section (110) with an upper and a lower rectangular side face (111a, 111b), each with a first and second relatively long side (L111a, L111b) and a first and second relatively short side (B111a, B111b),
- wherein the first electrical conductor (10) is wound directly around the central section (110) of the magnetic core (100) in such a way that the first electrical conductor (10) runs parallel to the first and second relatively long side (L111a, L111b) of the upper and lower side faces (111a, 111b) of the central section (110) of the magnetic core (100),
- wherein the magnetic core (100) has a first and a second lateral section (120a, 120b), wherein the first lateral section (120a) is arranged on a central part of the first relatively long side (L111a) of the upper and lower side faces (111a, 111b) of the central section (110) of the magnetic core, and the second lateral section (120b) is arranged on a central part of the second relatively long side (L111b) of the upper and lower side faces (111a, 111b) of the central section (110) of the magnetic core (100),
- wherein the second electrical conductor (20) is wound directly around the first and second lateral sections (120a, 120b) of the magnetic core in such a way that the second electrical conductor (20) is arranged over the first electrical conductor (10) and runs orthogonally with respect to the first electrical conductor (10),
- wherein the magnetic core has a plurality of guide sections (130a, 130b, 130c, 130d), each with a duct (131) for guiding the third electrical conductor (30) around the magnetic core (100), wherein the guide sections (130a, 130b, 130c, 130d) are embodied in such a way that the third electrical conductor (30) runs orthogonally with respect to the first and second electrical conductors (10, 20),
- wherein each of the ducts (131) of the guide sections (130a, ..., 130d) has a base face (132) and in addition side walls (133, 134) arranged laterally,
- wherein on an outer surface of a first of the respective side walls (133) of the ducts (131) of each of the guide sections (130a, ..., 130d) there is arranged a projection (135) designed for insertion into the recesses (210) of the at least one carrier element (200a, ..., 200d),
- wherein the respective projections (135) of the magnetic core and the recess (210) of the at least one carrier element (200a, ..., 200d) are embodied in such a way that after the insertion of the projections (135) of the magnetic core into the recess (210) of the at least one carrier element (200a, ..., 200d) the magnetic core (100) is oriented on the at least one carrier element.

2. Antenna component according to Claim 1,
- wherein the central section (110) of the magnetic core has a first and second central side face (112a, 112b), which central side faces (112a, 112b) are arranged between the relatively short first and second sides (B111a, B111b) of the upper and lower side faces (111a, 111b) of the central section (110) of the magnetic core,
- wherein the first electrical conductor (10) is wound directly around the upper and lower side faces (111a, 111b) and the first and second side faces (112a, 112b), arranged between them, of the central section (110) of the magnetic core.

3. Antenna component according to one of Claims 1 or 2,
- wherein the first and second lateral sections (120a, 120b) of the magnetic core each have an an upper and lower side face (121, 122) and a central side face (123) arranged between them,
- wherein the second electrical conductor (20) is arranged directly on the respective upper, lower and central side faces (121, 122, 123) of the first and second lateral sections (120) of the magnetic core (100).

4. Antenna component according to Claim 3,
- wherein the upper side face (111a) of the central section (110) of the magnetic core (100) is arranged parallel to the respective upper side face (121) of the lateral sections (120a, 120b) of the magnetic core (100),
- wherein the lower side face (111b) of the central section (110) of the magnetic core (100) is arranged parallel to the respective lower side face (122) of the lateral sections (120a, 120b) of the magnetic core,
- wherein a height of the magnetic core between the upper and lower side faces (111a, 111b) of the central section (110) of the magnetic core is less than a height of the magnetic core between the respective upper and lower side faces (121, 122) of the lateral sections (120a, 120b) of the magnetic core.

5. Antenna component according to one of Claims 2 to 4,
- wherein the plurality of guide sections (130a, ..., 130d) are arranged at the corners of the magnetic core (100) between the first and second lateral sections (120a, 120b) of the magnetic core and the central side faces (112a, 112b) of the central section (120) of the magnetic core,
- wherein each of the guide sections (130a, ..., 130d) has a duct (131) which is shaped in such a way that the third electrical conductor (30) is guided through the duct (131) around the corners of the magnetic core (100).

6. Antenna component according to Claim 5,
- wherein the third electrical conductor (30) is arranged directly on the base face (132) of the respective duct (131) of the guide sections (130a, ..., 130d),
- wherein the respective base face (132) of the ducts (131) of the guide sections (130a, ..., 130d) is shaped in such a way that the third electrical conductor (30) is guided along the respective central side face (123) of the lateral sections (120a, 120b) of the magnetic core around the corners of the magnetic core (100) and along the first and second central side faces (112a, 112b) of the central section (110) of the magnetic core.

7. Antenna component according to Claim 6,
wherein the respective base face (132) of the ducts (131) of the guide sections (130a, ..., 130d) is arranged in a plane over the respective central side face (123) of the lateral sections (120a, 120b) of the magnetic core and over the first and second central side faces (112a, 112b) of the central section (110) of the magnetic core.

8. Antenna component according to one of Claims 1 to 7, comprising
- a plurality of connecting contacts (300) for making contact between the first, second and third electrical conductors (10, 20, 30) and the at least one carrier element (200a, ..., 200d),
- wherein each of the connecting contacts (300) has a terminal device (310) for connecting one of the electrical conductors (10, 20, 30) and a contact-forming device (320) for forming electrical contact with one of the electrical conductors (10, 20, 30).

9. Antenna component according to one of Claims 1 to 8,
wherein the magnetic core (100) and the electrical conductors (10, 20, 30) are surrounded by a casting material (400).

10. Antenna component according to one of Claims 1 to 9,
- wherein a respective second of the side walls (134) of the ducts (131) of the guide sections (130a, ..., 130d) does not have a projection,
- wherein a ratio of the height (H1) between the projection (135) of the magnetic core and the second side wall (134) of each of the guide sections (130a, ..., 130d) and the height (H2) between the upper and lower side faces (111a, 111b) of the central section (110) of the magnetic core (100) is at least greater than 3.

11. Antenna component according to one of Claims 1 to 10,
wherein edges (101) between the side faces (111a, 111b, 112a, 112b) of the central section (110) of the magnetic core and edges (102) between the respective side faces (121, 122, 123) of the lateral sections (120a, 120b) of the magnetic core are rounded.

12. Antenna component according to one of Claims 1 to 11,
wherein the magnetic core (100) has a ferrite material with a density between 4600 kg/m³ and 6000 kg/m³ and a compressive strength between 200 N/mm² and 700 N/mm².

## Revendications

1. Composant d'antenne comprenant :
- des premier, deuxième et troisième conducteurs électriques (10, 20, 30),
- un noyau magnétique (100) sur lequel peuvent être enroulés les conducteurs électriques (10, 20, 30), dans lequel le noyau magnétique (100) est réalisé en une seule pièce,
- au moins un élément de support (200a, 200b, 200c, 200d) destiné à fixer le noyau magnétique (100), dans lequel ledit au moins un élément de support présente un évidement (210),
- dans lequel le noyau magnétique (100) comporte une partie centrale parallélépipédique (110) ayant des surfaces latérales supérieure et inférieure rectangulaires (111a, 111b) dont chacune présente des premier et deuxième côtés longs (L111a, L111b) et des premier et deuxième côtés courts (B111a, B111b),
- dans lequel le premier conducteur électrique (10) est enroulé directement autour de la partie centrale (110) du noyau magnétique (100) de manière à ce que le premier conducteur électrique (10) s'étende parallèlement aux premier et deuxième côtés longs (L111a, L111b) des surfaces latérales supérieure et inférieure (111a, 111b) de la partie centrale (110) du noyau magnétique (100),
- dans lequel le noyau magnétique (100) comporte des première et deuxième parties latérales (120a, 120b), dans lequel la première partie latérale (120a) est disposée sur une partie centrale du premier côté long (L111a) des surfaces latérales supérieure et inférieure (111a, 111b) de la partie centrale (110) du noyau magnétique et la deuxième partie latérale (120b) est disposée sur une partie centrale du deuxième côté long (L111b) des surfaces latérales supérieure et inférieure (111a, 111b) de la partie centrale (110) du noyau magnétique (100),
- dans lequel le deuxième conducteur électrique (20) est enroulé directement autour des première et deuxième parties latérales (120a, 120b) du noyau magnétique de manière à ce que le deuxième conducteur électrique (20) soit disposé sur le premier conducteur électrique (10) et s'étende perpendiculairement au premier conducteur électrique (10),
- dans lequel le noyau magnétique comporte une pluralité de parties de guidage (130a, 130b, 130c, 130d) qui comprennent respectivement un canal (131) destiné à guider le troisième conducteur électrique (30) autour du noyau magnétique (100), dans lequel les parties de guidage (130a, 130b, 130c, 130d) sont réalisées de manière à ce que le troisième conducteur électrique (30) s'étende perpendiculairement aux premier et deuxième conducteurs électriques (10, 20),
- dans lequel chacun des canaux (131) des parties de guidage (130a, ..., 130d) présente une surface inférieure (132) et des parois latérales (133, 134) disposées sur le côté de celle-ci,
- dans lequel une protubérance (135) réalisée de manière à être insérée dans les évidements (210) dudit au moins un élément de support (200a, ..., 200d) est disposée sur une surface extérieure d'une première des parois latérales (133) respectives des canaux (131) de chacune des parties de guidage (130a, ..., 130d),
- dans lequel les protubérances (135) respectives du noyau magnétique et l'évidement (210) dudit au moins un élément de support (200a, ..., 200d) sont réalisées de manière à ce que le noyau magnétique (100) soit orienté vers ledit au moins un élément de support après insertion des protubérances (135) du noyau magnétique dans l'évidement (210) dudit au moins un élément de support (200a, ..., 200d).

2. Composant d'antenne selon la revendication 1,
- dans lequel la partie centrale (110) du noyau magnétique comporte des première et deuxième surfaces latérales centrales (112a, 112b) disposées entre les premier et deuxième côtés courts (B111a, B111b) des surfaces latérales supérieure et inférieure (111a, 111b) de la partie centrale (110) du noyau magnétique,
- dans lequel le premier conducteur électrique (10) est enroulé directement autour des surfaces latérales supérieure et inférieure (111a, 111b) et des première et deuxième surfaces latérales (112a, 112b), disposées entre celles-ci, de la partie centrale (110) du noyau magnétique.

3. Composant d'antenne selon l'une des revendications 1 ou 2,
- dans lequel les première et deuxième parties latérales (120a, 120b) du noyau magnétique comportent respectivement des surfaces latérales supérieure et inférieure (121, 122) et une surface latérale centrale (123) disposée entre celles-ci,
- dans lequel le deuxième conducteur électrique (20) est disposé directement sur les surfaces latérales supérieure, inférieure et centrale (121, 122, 123) respectives des première et deuxième parties latérales (120) du noyau magnétique (100).

4. Composant d'antenne selon la revendication 3,
- dans lequel la surface latérale supérieure (111a) de la partie centrale (110) du noyau magnétique (100) est disposée parallèlement à la surface latérale supérieure (121) respective des parties latérales (120a, 120b) du noyau magnétique (100),
- dans lequel la surface latérale inférieure (111b) de la partie centrale (110) du noyau magnétique (100) est disposée parallèlement à la surface latérale inférieure (122) respective des parties latérales (120a, 120b) du noyau magnétique,
- dans lequel une hauteur du noyau magnétique entre les surfaces latérales supérieure et inférieure (111a, 111b) de la partie centrale (110) du noyau magnétique est inférieure à une hauteur du noyau magnétique entre les surfaces latérales supérieure et inférieure (121, 122) respectives des parties latérales (120a, 120b) du noyau magnétique.

5. Composant d'antenne selon l'une des revendications 2 à 4,
- dans lequel la pluralité de parties de guidage (130a, ..., 130d) sont disposées aux angles du noyau magnétique (100) entre les première et deuxième parties latérales (120a, 120b) du noyau magnétique et les surfaces latérales centrales (112a, 112b) de la partie centrale (120) du noyau magnétique,
- dans lequel chacune des parties de guidage (130a, ..., 130d) comporte un canal (131) qui est formé de manière à ce que le troisième conducteur électrique (30) soit guidé dans le canal (131) autour des angles du noyau magnétique (100).

6. Composant d'antenne selon la revendication 5,
- dans lequel le troisième conducteur électrique (30) est disposé directement sur la surface inférieure (132) du canal (131) respectif des parties de guidage (130a, ..., 130d),
- dans lequel la surface inférieure (132) respective des canaux (131) des parties de guidage (130a, ..., 130d) est formée de manière à ce que le troisième conducteur électrique (30) soit guidé le long des surfaces latérales centrales (123) respectives des parties latérales (120a, 120b) du noyau magnétique autour des angles du noyau magnétique (100) et le long des première et deuxième surfaces latérales centrales (112a, 112b) de la partie centrale (110) du noyau magnétique.

7. Composant d'antenne selon la revendication 6, dans lequel les surfaces inférieures (132) respectives des canaux (131) des parties de guidage (130a, ..., 130d) sont disposées dans un plan situé au-dessus des surfaces latérales centrales (123) respectives des parties latérales (120a, 120b) du noyau magnétique et au-dessus des première et deuxième surfaces latérales centrales (112a, 112b) de la partie centrale (110) du noyau magnétique.

8. Composant d'antenne selon l'une des revendications 1 à 7, comprenant :
- une pluralité de bornes de contact (300) destinées à mettre en contact les premier, deuxième et troisième conducteurs électriques (10, 20, 30) avec ledit au moins un élément support (200a, ..., 200d),
- dans lequel chacune des bornes de contact (300) comporte un dispositif de serrage (310) destiné à serrer l'un des conducteurs électriques (10, 20, 30) et un dispositif d'établissement de contact (320) destiné à établir un contact électrique avec ledit un des conducteurs électriques (10, 20, 30).

9. Composant d'antenne selon l'une des revendications 1 à 8, dans lequel le noyau magnétique (100) et les conducteurs électriques (10, 20, 30) sont entourés d'un matériau d'enrobage (400).

10. Composant d'antenne selon l'une des revendications 1 à 9,
- dans lequel une deuxième, respective, des parois latérales (134) des canaux (131) des parties de guidage (130a, ..., 130d) ne présente aucune protubérance,
- dans lequel un rapport de la hauteur (H1) entre la protubérance (135) du noyau magnétique et la deuxième paroi latérale (134) de chacune des parties de guidage (130a, ..., 130d) et la hauteur (H2) entre les surfaces latérales supérieure et inférieure (111a, 111b) de la partie centrale (110) du noyau magnétique (100) est au moins supérieur à 3.

11. Composant d'antenne selon l'une des revendications 1 à 10, dans lequel les bords (101) entre les surfaces latérales (111a, 111b, 112a, 112b) de la partie centrale (110) du noyau magnétique et les bords (102) entre les surfaces latérales (121, 122, 123) respectives des parties latérales (120a, 120b) du noyau magnétique sont arrondis.

12. Composant d'antenne selon l'une des revendications 1 à 11, dans lequel le noyau magnétique (100) comporte un matériau de ferrite ayant une densité comprise entre 4600 kg/m³ et 6000 kg/m³ et une résistance à la compression comprise entre 200 N/mm² et 700 N/mm².
